# EUROPÄISCHE PATENTSCHRIFT

(11) **EP 0 671 565 B1**
(45) Veröffentlichungstag und Bekanntmachung des Hinweises auf die Patenterteilung: **08.04.1998**
(21) Anmeldenummer: 95810050.5
(22) Anmeldetag: 27.01.1995
(51) Int. Cl.: F16B 19/10

(54) **Spreizdübel und Spreizdübelsetzgerät**
Spreading plug and setting device for the same
Cheville expansible et dispositif pour l'enfoncement

(30) Priorität: 28.02.1994 DE 4406423
(43) Veröffentlichungstag der Anmeldung: 13.09.1995
(73) Patentinhaber: HILTI Aktiengesellschaft, 9494 Schaan (LI)
(72) Erfinder: Meier, Peter, CH-9450 Lüchingen (CH)
(74) Vertreter: Wildi, Roland

(56) Entgegenhaltungen:
- DE-A- 3 607 660
- DE-A- 3 843 909
- DE-U- 8 902 678

## Beschreibung

Die Erfindung betrifft einen Spreizdübel und ein Spreizdübelsetzgerät, wobei der Spreizdübel eine im wesentlichen zylindrische Aussenkontur hat und das Spreizdübelsetzgerät ein Griffstück mit Schlagdom aufweist (DE-A-3 843 909).

Die hier zur Diskussion stehenden Spreizdübel weisen eine Spreizhülse auf, deren Verankerungsbereich mittels eines Spreizelementes spreizbar ist. Die Aussenkontur des Spreizdübels ist in ihrer Gesamtheit im wesentlichen zylindrisch ausgebildet, das heisst die Hülle, welche allfällig angeordnete Profilierungen einschliesst, bildet im wesentlichen einen Zylinder.

Die Spreizdübel der genannten Art werden insbesondere für qualitativ hochwertige Befestigungen eingesetzt. Aus diesem Grunde handelt es sich zumeist um Spreizdübel mit einer Spreizhülse aus Metall, welche in dem der Setzrichtung abgewandten Endbereich ein Lastangriffsmittel, beispielsweise in Form eines Gewindes aufweist. Der Verankerungsbereich der Spreizhülse ist zumeist mit Schlitzen versehen, die beispielsweise zum setzrichtungsseitigen Ende hin offen sein können. Das Spreizelement kann in Form eines Zylinders oder eines Kegels ausgebildet sein, welcher mit einer sich im Verankerungsbereich der Spreizhülse verengenden Bohrung zusammenwirkt, so dass eine Axialverschiebung des Spreizelementes zur Verspreizung der Spreizhülse im Verankerungsbereich führt.

Zur Erzielung hochwertiger Befestigungen mit den in Rede stehenden Spreizdübeln ist eine ausreichende Montagesicherheit von Bedeutung. Diese Montagesicherheit wird dann erreicht, wenn Gewähr für eine optimale Verspreizung des Verankerungsbereiches besteht. Diese ausreichende Verspreizung ist abhängig vom Weg, den das Spreizelement zurücklegt. Dieser Weg des Spreizelementes, der die Montagesicherheit des Spreizdübels gewährleistet, ist abhängig von der Auslegung des jeweiligen Spreizdübels.

Es ist bekannt, zur Verspreizung der Spreizdübel, das heisst zum Verschieben bzw. Eintreiben der Spreizelemente Spreizdübelsetzgeräte als Hilfsmittel zu verwenden. Diese Spreizdübelsetzgeräte weisen ein Griffstück auf, das mit einem Schlagdom versehen ist. Der Schlagdom dient zur Übertragung der beispielsweise mittels Hammerschlägen aufgebrachten Kraft auf das Spreizelement. Um zu gewährleisten, dass das Spreizelement um den dem jeweiligen Spreizdübel zugeordneten Weg verschoben wird, weist der Spreizdom der bekannten Spreizdübelsetzgeräte eine Schulter auf, welche sich an der rückwärtigen Stimseite der Spreizdübel abstützt und somit den Verschiebeweg des Spreizelementes begrenzt. Nach Aufliegen dieser Schulter auf der rückwärtigen Stirnseite des Spreizdübels ist damit gewährleistet, dass das Spreizelement um den bestimmungsgemäss dem jeweiligen Spreizdübel zugeordneten Weg verschoben wird und damit durch richtige Verspreizung die geforderte Montagesicherheit erzielt wird.

Da - wie bereits darauf hingewiesen - der Verschiebeweg des Spreizelementes von der Auslegung - beispielsweise Dimensionierung - des Spreizdübels abhängig ist, bedingt dies, für jeden zur Verwendung gelangenden Spreizdübeltyp ein gesondertes Spreizdübelsetzgerät zur Verfügung zu stellen, um die zur entsprechenden Montagesicherheit richtige Verspreizung zu gewährleisten. Bei der dadurch entstehenden Vielzahl von notwendigen Spreizdübelsetzgeräten besteht damit die Gefahr, dass ein falsches, nicht dem entsprechenden Spreizdübel zugeordnetes Spreizdübelsetzgerät Anwendung findet. Die Folge einer solchen Falschzuordnung ist eine unzureichende oder übermässige Verspreizung mit einer damit verbundenen Nichterreichung der geforderten Montagesicherheit.

Der Erfindung liegt die Aufgabe zugrunde, eine Massnahme vorzusehen, welche der Bedienungsperson aufzeigt, dass dem jeweils verwendeten Spreizdübel das richtige Spreizdübelsetzgerät zugeordnet wird.

Erfindungsgemäss wird die Aufgabe dadurch gelöst, dass das Griffstück wenigstens eine wannenförmige Ausnehmung aufweist, deren axiale Länge der Länge des Spreizdübels entspricht und deren Wandung unter einem dem halben Aussendurchmesser des Spreizdübels entsprechenden Radius gewölbt ist.

Die erfindungsgemäss vorgeschlagene wannenförmige Ausnehmung am Griffstück des Spreizdübelsetzgerätes erlaubt ein spielfreies, teilweises Eintauchen eines bestimmten Spreizdübels. Da von diesem bestimmten Spreizdübel der zur entsprechenden Montagesicherheit führende richtige Verschiebeweg des Spreizelementes bekannt ist, kann der Spreizdom durch richtige Lage der Schulter entsprechend abgestimmt werden. Das spielfreie teilweise Eintauchen des Spreizdübels in die wannenförmige Ausnehmung bestätigt damit dem Anwender, dass er das richtige Spreizdübelsetzgerät dem entsprechenden Spreizdübel zugeordnet hat. Wird das Spreizdübelsetzgerät beispielsweise einem zu gross dimensionierten Spreizdübel zugeordnet, lässt sich letzterer nicht in die wannenförmige Ausnehmung sowohl hinsichtlich Länge als auch hinsichtlich Wölbung einfügen. Wird dagegen das Spreizdübelsetzgerät einem zu klein dimensionierten Spreizdübel zugeordnet, zeigt sich ein Spiel des Spreizdübels innerhalb der wannenförmigen Ausnehmung sowohl hinsichtlich Länge als auch hinsichtlich Wölbung. Die Falschzuordnung ist somit für die Bedienungsperson klar ersichtlich.

Um zu gewährleisten, dass der Spreizdübel einfach in die wannenförmige Ausnehmung einführbar und auch wiederum problemlos aus dieser entnehmbar ist, entspricht die grösste Tiefe der Ausnehmung höchstens dem halben Aussendurchmesser des Spreizdübels.

Sowohl ein Spiel bei zu kleinen Spreizdübeln als auch ein Übermass bei zu grossen Spreizdübeln ist gut erkennbar, wenn zweckmässigerweise die grösste Tiefe der Ausnehmung dem 0,2 bis 0,4-fachen des Aussendurchmessers des Spreizdübels entspricht.

Handhabungstechnisch für die Bedienungsperson wirkt es sich dann vorteilhaft aus, wenn die axiale Erstreckung der Ausnehmung parallel zur Längsachse des Griffstückes verläuft. Darüber hinaus behindert eine derart angeordnete Ausnehmung die Halterung des Griffstückes durch die Bedienungsperson in keiner Weise.

Meistens wird ein separates Spreizdübelsetzgerät sowohl für jede Durchmesser- als auch jede Längendimension der Spreizübel benötigt. In all diesen Fällen handelt es sich um eine klar auf die Aussenkontur des jeweiligen Spreizdübels abgestimmte wannenförmige Ausnehmung am Griffstück des Spreizdübelsetzgerätes. In gewissen Fällen ist es jedoch auch möglich, bei ein und demselben Durchmesser des Spreizdübels für unterschiedliche Längen das selbe Spreizdübelsetzgerät zu verwenden, da der Spreizweg der Spreizelemente gleichbleibt, weil das Spreizverhalten durch unterschiedliche Gestaltung der Spreizelemente ausgeglichen wird. Somit kann in solchen Fällen ein und dasselbe Spreizdübelsetzgerät für Spreizdübel unterschiedlicher Längen verwendet werden. Um auch diese Anwendung mit der wannenförmigen Vertiefung als Hilfsmittel zu erfassen, besteht die Möglichkeit, die Vertiefung mit Markierungen für die unterschiedlichen Längen zu versehen, oder die eine Stimseite der wannenförmigen Vertiefung gestuft auszubilden, wobei jede Stufe einer Länge des Verwendung findenden Spreizdübels entspricht.

Die Erfindung wird nachstehend anhand von Zeichnungen, welche ein Ausführungsbeispiel wiedergeben, näher erläutert. Es zeigen:
- Fig. 1: eine Ansicht eines Spreizdübels mit richtig zugeordnetem Spreizdübelsetzgerät;
- Fig. 2: einen Schnitt längs der Linie II-II durch das Spreizdübelsetzgerät entsprechend Fig. 1 mit bestimmungsgemässer Lage des Spreizdübels entsprechend Fig. 1.

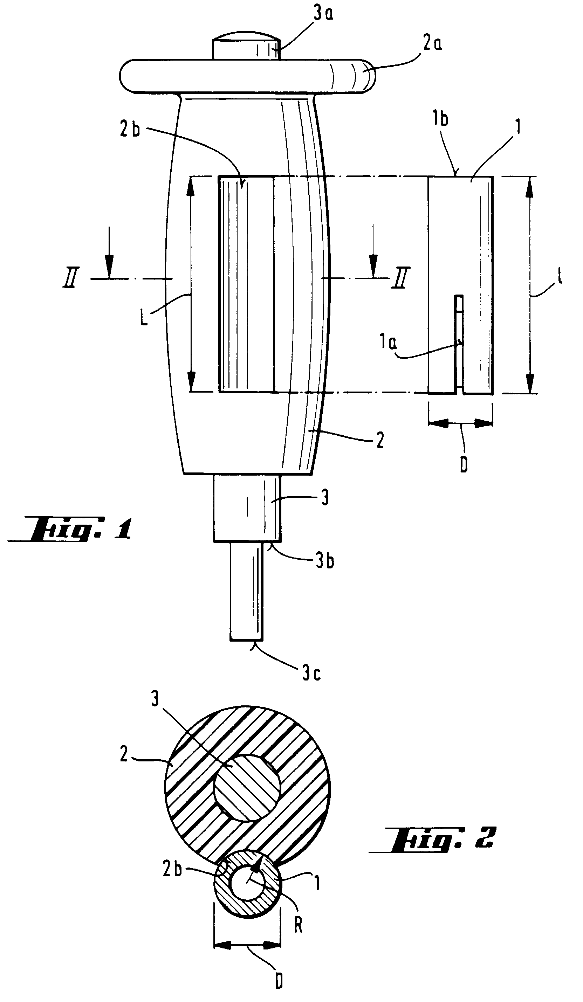

Die Fig. 1 zeigt in Ansicht einen Spreizdübel samt dem dazugehörigen Spreizdübelsetzgerät ebenfalls in Ansicht. Dabei weist der Spreizdübel eine Spreizhülse 1 auf, deren Verankerungsbereich mit Längsschlitzen 1a versehen ist. Spreizen lässt sich der Verankerungsbereich mittels eines zeichnerisch nicht dargestellten, innerhalb der Spreizhülse 1 angeordneten Spreizelementes.

Das Spreizdübelsetzgerät weist ein Griffstück 2 sowie einen Schlagdom 3 auf. Der Schlagdom 3 durchsetzt in beispielhafter Weise das Griffstück 2 und überragt entgegen der Setzrichtung mit seinem rückwärtigen Ende 3a das Griffstück 2. Dadurch kann die Krafteinwirkung, beispielsweise abgegeben durch Hammerschläge, direkt auf das setzrichtungsseitige Ende 3c des Schlagdomes 3 übertragen werden. Zur längenmässigen richtigen Definition des setzrichtungsseitigen Endes 3c des Schlagdomes 3 ist eine Schulter 3b vorgesehen, welche dafür sorgt, dass bei Auflage dieser Schulter 3b an der rückwärtigen Stimseite 1b der Spreizhülse 1 das Spreizelement um den richtigen, für die Verspreizung massgebenden Weg verschoben wird.

Wie die Fig. 1 femer zeigt, ist das Griffstück 1 zum Schutze der Hand der Bedienungsperson mit einem Flansch 2a versehen, welcher beispielsweise dann von Bedeutung ist, wenn die Krafteinwirkung mittels Hammerschlägen erfolgt. Zudem ist das Griffstück 2 mit einer wannenförmigen Ausnehmung 2b versehen, deren axiale Länge L der Länge I des Spreizdübels mit Spreizhülse 1 entspricht.

Wie die Fig. 2 zeigt, ist die wannenförmige Ausnehmung 2b unter einem Radius R gewölbt, welcher dem halben Aussendurchmesser D des Spreizdübels mit Spreizhülse 1 entspricht. Die Fig. 2 verdeutlicht insbesondere das bestimmungsgemässe lagerichtige Einsetzen des Spreizdübels mit Spreizhülse 1 in die wannenförmige Ausnehmung 2b des Griffstückes 2 zwecks Kontrolle der richtigen Zuordnung von Spreizdübelsetzgerät und Spreizdübel.

Aus der Fig. 2 ist ferner im Schnitt der Spreizdübel, Spreizhülse 1, das Griffstück 2 und der Spreizdom 3 ersichtlich. Wie beispielhaft dargestellt, handelt es sich beim Spreizdübelsetzgerät um ein Griffstück 2 aus Kunststoff und einen dieses Griffstück 2 durchsetzenden Schlagdorn 3 aus Metall. Diese Materialwahl kann jedoch auch variiert werden, beispielsweise durch einstückige Ausführungsform aus Metall.

Bei den hier zur Diskussion stehenden Spreizdübeln handelt es sich vorzugsweise aus Gründen der höheren Anforderungen um Metalldübel.

## Patentansprüche

1. Spreizdübel und Spreizdübelsetzgerät, wobei der Spreizdübel eine im wesentlichen zylindrische Aussenkontur hat und das Spreizdübelsetzgerät ein Griffstück (2) mit Schlagdom (3) aufweist, **dadurch gekennzeichnet**, dass das Griffstück (2) wenigstens eine wannenförmige Ausnehmung (2b) aufweist, deren axiale Länge (L) der Länge (1) des Spreizdübels entspricht und deren Wandung unter einem, dem halben Aussendurchmesser (D) des Spreizdübels entsprechenden Radius (R) gewölbt ist.

2. Spreizdübel und Spreizdübelsetzgerät nach Anspruch 1, dadurch gekennzeichnet, dass die grösste Tiefe der Ausnehmung (2b) höchstens dem halben Aussendurchmesser (D) des Spreizdübels entspricht.

3. Spreizdübel und Spreizdübelsetzgerät nach Anspruch 2, dadurch gekennzeichnet, dass die grösste Tiefe der Ausnehmung (2b) dem 0,2- bis 0,4-fachen des Aussendurchmessers (D) des Spreizdübels entspricht.

4. Spreizdübel und Spreizdübelsetzgerät nach einem der Ansprüche 1 bis 3, dadurch gekennzeichnet, dass die axiale Erstreckung der Ausnehmung (2b) parallel zur Längsachse des Griffstückes (2) verläuft.

## Claims

1. Expanding dowel and expanding dowel setting tool, and the expanding dowel has an essentially cylindrical external contour and the dowel setting tool comprises a handle (2) with striking pin (3), **characterised in that** the handle (2) comprises at least one troughshaped cutout (2b) the axial length (L) of which corresponds with the length (I) of the expanding dowel and the wall of which is domed under a radius (R) which corresponds with half the outside diameter (D) of the expanding dowel.

2. Expanding dowel and expanding dowel setting tool according to Claim 1, **characterised in that** the greatest depth of the cutout (2b) equals maximum half the outside diameter (D) of the expanding dowel.

3. Expanding dowel and expanding dowel setting tool according to Claim 2, **characterised in that** the greatest depth of the cutout (2b) equals between 0.2 and 0.4 times the outside diameter (D) of the expanding dowel.

4. Expanding dowel and expanding dowel setting tool according to one of Claims 1 to 3, **characterised in that** the axial extent of the cutout (2b) extends parallel to the longitudinal axis of the handle (2).

## Revendications

1. Cheville expansible et outil de pose de cheville expansible, la cheville expansible ayant un contour extérieur sensiblement cylindrique et l'outil de pose de cheville expansible comportant une poignée (2) munie d'un pointeau (3), caractérisée en ce que la poignée (2) comporte au moins un évidement en forme de cuve (2b) dont la longueur axiale (L) correspond à la longueur (1) de la cheville expansible et dont la paroi est incurvée selon un rayon (R) correspondant à la moitié du diamètre extérieur (D) de la cheville expansible.

2. Cheville expansible et outil de pose de cheville expansible selon la revendication 1, caractérisée en ce que la profondeur maximale de l'évidement (2b) correspond au maximum à la moitié du diamètre extérieur (D) de la cheville expansible.

3. Cheville expansible et outil de pose de cheville expansible selon la revendication 2, caractérisée en ce que la profondeur maximale de l'évidement (2b) correspond à une valeur comprise entre 0,2 et 0,4 fois le diamètre extérieur (D) de la cheville expansible.

4. Cheville expansible et outil de pose de cheville expansible selon l'une des revendications 1 à 3, caractérisée en ce que l'extension axiale de l'évidement (2b) s'étend parallèlement à l'axe longitudinal de la poignée (2).
